# FASCICULE DE BREVET EUROPEEN

(11) **EP 4 037 828 B1**
(45) Date de publication et mention de la délivrance du brevet: **08.11.2023**
(21) Numéro de dépôt: 20771585.5
(22) Date de dépôt: 18.09.2020
(51) Int. Cl.: B01J 29/70, B01J 35/00, C01B 39/48

(54) **SYNTHESE A BASSE TEMPERATURE DE ZEOLITHE AFX DE HAUTE PURETE**
TIEFTEMPERATURSYNTHESE VON HOCHREINEM AFX-ZEOLITH
LOW-TEMPERATURE SYNTHESIS OF HIGH-PURITY AFX ZEOLITE

(30) Priorité: 30.09.2019 FR 1910841
(43) Date de publication de la demande: 10.08.2022
(73) Titulaire: IFP Energies nouvelles, 92852 Rueil-Malmaison Cedex (FR)
(72) Inventeur: HARBUZARU, Bogdan, 92852 RUEIL-MALMAISON CEDEX (FR); BERTHOUT, David, 92852 RUEIL-MALMAISON CEDEX (FR); LLIDO, Eric, 92852 RUEIL-MALMAISON CEDEX (FR); JOTHIE, Laëtitia, 92852 RUEIL-MALMAISON CEDEX (FR); MARTINEZ FRANCO, Raquel, 92852 RUEIL-MALMAISON CEDEX (FR)
(74) Mandataire: IFP Energies nouvelles
(86) Numéro de dépôt international: PCT/EP2020/076094
(87) Numéro de publication internationale: WO 2021/063705

(56) Documents cités:
- EP-A1- 3 378 831
- WO-A1-2016/077667
- WO-A1-2017/202495
- WO-A1-2019/224087

## Description

### DOMAINE TECHNIQUE

L'invention a pour objet un procédé de synthèse à basse température d'une zéolithe de type structural AFX. En particulier, ledit nouveau procédé permet de réaliser la synthèse à basse température d'une zéolithe de type structural AFX de haute pureté, à partir d'au moins une source de silicium, d'au moins une source d'aluminium, d'au moins une source d'au moins un métal alcalin et/ou alcalino-terreux de valence n et d'une molécule organique ou structurant spécifique comportant deux fonctions ammonium quaternaire, le 1,6-bis(méthylpiperidinium)hexane sous forme dihydroxyde. Ladite zéolithe de type structural AFX obtenue selon le procédé de l'invention trouve avantageusement son application en tant que catalyseur, adsorbant ou agent de séparation.

### TECHNIQUE ANTERIEURE

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

Les zéolithes de type structural AFX comprennent en particulier la zéolithe SSZ-16, et les zéotypes SAPO-56 et MEAPSO-56. La zéolithe de type structural AFX présente un système tridimensionnel de pores délimités par huit tétraèdres et est formé par deux types de cages: gmelinite (cage GME) et une grande cage AFT (-8,3 x 13,0 Ǻ). De nombreuses méthodes de synthèse de zéolithes de type structural AFX, en particulier de la zéolithe SSZ-16, sont connues. La zéolithe SSZ-16 a été synthétisée en utilisant des espèces organiques azotées dérivées de type 1,4-di(1-azoniabicyclo[2.2.2]octane)butyl dibromide et avec une durée de cristallisation typiquement supérieure à 3 jours et à une température égale ou supérieure à 140°C (US. Patent No. 4,508,837). Chevron Research and Technology Company a préparé la zéolithe SSZ-16 en présence de cations DABCO-Cₙ-diquat, où DABCO représente le 1,4-diazabicyclo[2.2.2]octane et n est 3, 4 ou 5 avec une durée de cristallisation typiquement supérieure à 3 jours et à une température supérieure à 100°C, de préférence supérieure à 130°C (U.S. Patent No.5,194,235). S.B. Hong et al ont utilisés l'ion alkylammonium diquaternaire Et6-diquat-n, où Et6-diquat représente N',N'-bis-triethylpentanediammonium et n est 5, comme agent structurant pour la synthèse de la zéolithe SSZ-16 avec une durée de formation de la zéolithe SSZ-16 comprise entre 7 et 14 jours et à une température de 160°C, (Micropor. Mesopor. Mat., 60 (2003) 237-249). On peut citer également l'utilisation des cations 1,3-bis(adamantyl)imidazolium comme agent structurant pour la préparation de zéolithe de type structural AFX avec une durée de cristallisation comprise entre 7 et 10 jours et généralement comprise entre 2 et 15 jours, et à une température supérieure à 100°C, de préférence entre 120 et 160°C (R.H. Archer et al., Microp. Mesopor. Mat., 130 (2010) 255-265, Johnson Matthey Company WO2016077667A1). Inagaki Satoshi et al. (JP2016169139A) ont utilisé des cations divalents N,N,N',N'-tétraarquirubicyclo[2.2.2]oct-7-ene-2,3:05,6-dipyrrolidium substitués avec des groupes alkyle avec une durée de cristallisation généralement comprise entre 20 et 400 heures et à des températures comprises entre 100 et 200°C, de préférence entre 150 et 175°C, pour préparer la zéolithe SSZ-16. Chevron U.S.A. (WO2017/200607 A1) propose de réaliser la synthèse d'une zéolithe SSZ-16 avec une durée de cristallisation de 1 à 28 jours et à des températures comprises entre 130 et 175°C en utilisant les dications : 1,1'-(1,4-cyclohexylenedimethylene)bis[1-methylpiperidinium], 1,1'-(1,4-cyclohexylenedimethylene)bis[1-methylpyrrolidinium], 1,1'-(1,4-cyclohexylenedimethylene)bis[1-ethylpyrrolidinium]. H.-Y. Chen et al. (Johnson Matthey Company, US2018/0093897) ont utilisé un mélange de cations contenant au moins le 1,3-bis(adamantyl)imidazolium et une amine neutre pour préparer la zéolithe JMZ-10 de type structural AFX en absence de cations alcalins avec une durée de cristallisation entre 1 et 20 jours et à des températures comprises entre 100 et 200°C. H.-Y. Chen et al. (Johnson Matthey Company, US2018/0093259) ont utilisé un mélange de cations contenant une molécule organique choisie parmi le 1,3-bis(adamantyl)imidazolium, le N,N-dimethyl-3,5-dimethylpiperidinium, le N,N-diethyl-cis-2,6-dimethylpiperidinium, le N,N,N-1-trimethyladamantylammonium, le N,N,N-dimethylethylcyclohexylammonium et au moins un cation de métal alcalino-terreux pour obtenir la zéolithe JMZ-7 de type structural AFX qui présente des sites Al proches par rapport à une zéolithe obtenue par une synthèse mettant en oeuvre des cations alcalins. La durée nécessaire pour obtenir cette zéolithe varie de 3 à 15 jours à une température supérieure à 100°C, de préférence entre 120 et 180°C.

K.G Strohmaier et al. (Exxon Mobil, WO2017202495A1) ont utilisé la molécule organique 1,1'-(hexane-1,6-dyil)bis(1-méthylpipéridinium) en présence d'un complexe métallique stabilisé par des ligands d'amine pour obtenir une zéolithe de type structural AFX avec une durée de cristallisation de 1 jour à environ 100 jours et à des températures comprises entre 100 et 200°C, de préférence entre 150 et 170°C.

La demanderesse a découvert qu'une zéolithe de type structural AFX de haute pureté pouvait être préparée selon un mode de synthèse particulier, c'est-à-dire à des températures de cristallisation inferieures ou égales à 95°C. Un autre avantage de cette méthode de synthèse de la zéolithe est qu'il n'est pas nécessaire d'utiliser des réacteurs qui travaillent à une pression supérieure à l'atmosphérique.

### RESUME DE L'INVENTION

L'invention concerne un procédé de synthèse d'une zéolithe AFX de pureté supérieure à 90% comprenant au moins les étapes suivantes :
i) le mélange en milieu aqueux, d'au moins une source de silicium (Si) sous forme oxyde SiO₂, d'au moins une source d'aluminium (AI) sous forme oxyde Al₂O₃, d'un composé organique azoté R, R étant le dihydroxyde de 1,6-bis(méthylpiperidinium)hexane, d'au moins une source d'au moins un métal alcalin choisi parmi le lithium, le potassium, ou le sodium, et le mélange d'au moins deux de ces métaux, le mélange réactionnel présentant la composition molaire suivante :
   SiO₂/Al₂O₃ compris entre 4 et 60, de préférence entre 8 et 40
   H₂O/SiO₂ compris entre 5 et 60, de préférence entre 10 et 40
   R/SiO₂ compris entre 0,05 à 0,50, de préférence entre 0,10 et 0,30
   M₂O/SiO₂ compris entre 0,10 à 0,30, de préférence entre 0,15 et 0,25, jusqu'à l'obtention d'un gel précurseur homogène;
ii) le traitement hydrothermal sous pression atmosphérique dudit gel précurseur obtenu à l'issue de l'étape i) à une température comprise entre 75°C et 95°C, bornes incluses, pendant une durée comprise entre 40 et 100 heures, bornes incluses, pour obtenir une phase solide cristallisée de type structural AFX, dite zéolithe AFX.

Le rapport SiO₂/Al₂O₃ de la zéolithe AFX obtenue est avantageusement compris entre 4 et 60, bornes incluses, de préférence entre 8 et 40, bornes incluses.

De préférence M est le sodium.

De préférence, la source d'au moins un métal alcalin et/ou alcalino-terreux M est l'hydroxyde de sodium.

On peut ajouter des germes cristallins d'une zéolithe de type structural AFX au mélange réactionnel de l'étape i), de préférence en quantité comprise entre 0,05 et 10% de la masse totale des sources desdits élément(s) Si et Al sous forme anhydre utilisées dans le mélange réactionnel, lesdits germes cristallins n'étant pas pris en compte dans la masse totale des sources des éléments Si et Al.

L'étape i) peut comprendre une étape de mûrissement du mélange réactionnel à une température comprise entre 20 et 60°C, avec ou sans agitation, pendant une durée comprise entre 30 minutes et 48 heures.

Le traitement hydrothermal de l'étape ii) est réalisé sous pression atmosphérique, de préférence à une température comprise entre 85°C et 95°C, bornes incluses, pendant une durée comprise de préférence entre 40 et 80 heures, de manière très préférée entre 48 et 80 heures, bornes incluses.

La phase solide obtenue à l'issue de l'étape ii) peut être filtrée, lavée, et séchée à une température comprise entre 20 et 150°C, de préférence entre 60 et 100°C, pendant une durée comprise entre 5 et 24 heures pour obtenir une zéolithe séchée.

De préférence, la zéolithe séchée est ensuite calcinée à une température comprise entre 450 et 700°C pendant une durée comprise entre 2 et 20 heures, la calcination pouvant être précédée d'une montée en température progressive.

La zéolithe de type structural AFX de rapport SiO₂/Al₂O₃ compris entre 4 et 60, bornes incluses, obtenue par le procédé de préparation précédemment décrit et calcinée, présente les valeurs moyennes des dₕₖₗ et intensités relatives mesurées sur un diagramme de diffraction de rayons X suivantes :

**Tableau 1**

| 2 thêta (°) | dhkl (Å) | Irel | 2 thêta (°) | dhkl (Å) | Irel |
|---|---|---|---|---|---|
| 7,47 | 11,83 | mf | 22,52 | 3,95 | f |
| 8,56 | 10,32 | f | 26,06 | 3,42 | m |
| 8,67 | 10,19 | mf | 27,69 | 3,22 | mf |
| 11,59 | 7,63 | f | 27,76 | 3,21 | f |
| 12,96 | 6,82 | mf | 27,86 | 3,20 | mf |
| 14,99 | 5,91 | ff | 29,74 | 3,00 | ff |
| 15,60 | 5,67 | f | 30,22 | 2,95 | mf |
| 17,42 | 5,09 | mf | 30,49 | 2,93 | mf |
| 17,77 | 4,99 | mf | 31,48 | 2,84 | mf |
| 19,86 | 4,47 | f | 33,57 | 2,67 | f |
| 20,32 | 4,37 | m | 34,68 | 2,58 | f |
| 21,74 | 4,08 | FF | | | |

| | | | | | |
|---|---|---|---|---|---|
| où FF = très fort ; F = fort ; m = moyen ; mf = moyen faible ; f = faible ; ff = très faible. l'intensité relative Iᵣₑₗ étant donnée en rapport à une échelle d'intensité relative où il est attribué une valeur de 100 à la raie la plus intense du diagramme de diffraction des rayons X : ff <15 ; 15 ≤30 ; 30 ≤ mf <50 ; 50 ≤m < 65 ; 65 ≤F < 85 ; FF ≤ 85. | | | | | |

### LISTE DES FIGURES

La Figure 1 représente la formule chimique du composé organique azoté choisi comme structurant utilisé dans le procédé de synthèse selon l'invention.
La figure 2 représente le diagramme de diffraction X de la zéolithe AFX obtenue selon l'exemple 2.

D'autres caractéristiques et avantages du procédé de synthèse de la zéolithe AFX selon l'invention, apparaîtront à la lecture de la description ci-après d'exemples non limitatifs de réalisations, en se référant aux figures annexées et décrites ci-après.

### DESCRIPTION DES MODES DE REALISATION

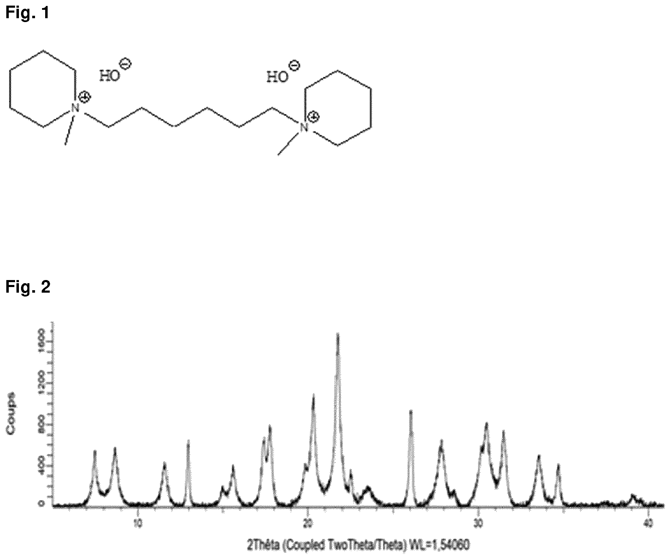

L'invention concerne un procédé de synthèse d'une zéolithe de type structural AFX de pureté supérieure à 90% comprenant au moins les étapes suivantes :
i) le mélange en milieu aqueux, d'au moins une source de silicium (Si) sous forme oxyde SiO₂, au moins une source d'aluminium (AI) sous forme oxyde Al₂O₃, d'un composé organique azoté R, R étant le dihydroxyde de 1,6-bis(méthylpiperidinium)hexane (**Figure 1**), d'au moins une source d'au moins un métal alcalin choisi parmi le lithium, le potassium, ou le sodium, et le mélange d'au moins deux de ces métaux, le mélange réactionnel présentant la composition molaire suivante :
   SiO₂/Al₂O₃ compris entre 4 et 60, de préférence entre 8 et 40
   H₂O/SiO₂ compris entre 5 et 60, de préférence entre 10 et 40
   R/SiO₂ compris entre 0,05 à 0,50, de préférence entre 0,10 et 0,30
   M₂O/SiO₂ compris entre 0,10 à 0,30, de préférence entre 0,15 et 0,25,
   jusqu'à l'obtention d'un gel précurseur homogène ;
ii) le traitement hydrothermal sous pression atmosphérique dudit gel précurseur obtenu à l'issue de l'étape i) à une température comprise entre 75 et 95°C, bornes incluses, de préférence entre 85°C et 95°C, pendant une durée comprise entre 40 et 100 heures.

Avantageusement, le rapport SiO₂/Al₂O₃ de la zéolithe AFX obtenue est compris entre 4 et 60, de préférence entre 8 et 40, bornes incluses.

De préférence, M est le sodium.

De préférence, la source d'au moins un métal alcalin est l'hydroxyde de sodium.

On peut ajouter des germes cristallins d'une zéolithe de type structural AFX au mélange réactionnel de l'étape i), de préférence en quantité comprise entre 0,05 et 10% de la masse totale de SiO₂ et Al₂O₃, lesdits germes cristallins n'étant pas pris en compte dans la masse totale des sources des éléments Si et Al.

L'étape i) peut comprendre une étape de mûrissement du mélange réactionnel à une température comprise entre 20 et 60°C, avec ou sans agitation, pendant une durée comprise entre 30 minutes et 48 heures.

Le traitement hydrothermal de l'étape ii) est avantageusement réalisé sous reflux à une température comprise entre 75 et 95°C, de préférence entre 85°C et 95°C, bornes incluses, pendant une durée comprise entre 40 et 100 heures, de préférence entre 48 et 80 heures. La pression est la pression atmosphérique.

Plus particulièrement, le procédé selon la présente invention comprend une étape i) de mélange en milieu aqueux, d'au moins une source de silicium (Si) sous forme oxyde SiO₂, au moins une source d'aluminium (AI) sous forme oxyde Al₂O₃, d'un composé organique azoté R, R étant le dihydroxyde de 1,6-bis(méthylpiperidinium)hexane, d'au moins une source d'au moins un métal alcalin choisi parmi le lithium, le potassium, ou le sodium, et le mélange d'au moins deux de ces métaux, le mélange réactionnel présentant la composition molaire suivante :
SiO₂/Al₂O₃ compris entre 4 et 60, de préférence entre 8 et 40
H₂O/SiO₂ compris entre 5 et 60, de préférence entre 10 et 40
R/SiO₂ compris entre 0,05 à 0,50, de préférence entre 0,10 et 0,30
M₂O/SiO₂ compris entre 0,10 à 0,30, de préférence entre 0,15 et 0,25, jusqu'à l'obtention d'un gel précurseur homogène;
puis une étape ii) de traitement hydrothermal sous pression atmosphérique dudit gel précurseur obtenu à l'issue de l'étape i) à une température comprise entre 75°C et 95°C, de préférence entre 85°C et 95°C, bornes incluses, pendant une durée comprise entre 40 et 100 heures, de préférence entre 48 et 80 heures, jusqu'à ce que ladite zéolithe de type structural AFX de haute pureté se forme.

Dans la composition molaire du mélange réactionnel ci-dessus et dans l'ensemble de la description :
SiO₂ désigne la quantité molaire de silicium exprimée sous forme oxyde, et Al₂O₃ désigne la quantité molaire d'aluminium exprimée sous forme oxyde,
H₂O la quantité molaire d'eau présente dans le mélange réactionnel,
R la quantité molaire dudit composé organique azoté,
M₂O la quantité molaire exprimée sous forme oxyde de M₂O par la source de métal alcalin.

Un avantage de la présente invention est donc de fournir un nouveau procédé de préparation permettant la formation d'une zéolithe de type structural AFX pure à l'issue de l'étape ii).

Un autre avantage de la présente invention est de permettre la préparation d'un gel précurseur d'une zéolithe de type structural AFX grâce à la combinaison d'une espèce organique ou structurant spécifique comportant deux fonctions ammonium quaternaire, le dihydroxyde de 1,6-bis(méthylpiperidinium)hexane et de conditions opératoires bien spécifiques, notamment une température contrôlée

L'étape ii) comprend un traitement hydrothermal dudit gel précurseur obtenu à l'issue de l'étape i) qui est effectué à une température comprise entre 75°C et 95°C, de préférence entre 85°C et 95°C, bornes incluses, pendant une durée comprise entre 40 et 100 heures, de préférence entre 48 et 80 heures, jusqu'à ce que ladite zéolithe de type structural AFX cristallise. Il est ainsi possible d'effectuer cette étape à pression atmosphérique, notamment dans un réacteur ouvert à l'atmosphère.

Conformément à l'invention, au moins une source d'au moins un oxyde SiO₂ est incorporée dans le mélange pour la mise en oeuvre de l'étape (i) du procédé de préparation. La source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "AEROSIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX HS-40.

Conformément à l'invention, au moins une source de Al₂O₃ est incorporée dans le mélange pour la mise en oeuvre de ladite étape (i). La source d'aluminium est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Conformément à l'invention, R est un composé organique azoté, le dihydroxyde de 1,6-bis(méthylpiperidinium)hexane, ledit composé étant incorporé dans le mélange réactionnel pour la mise en oeuvre de l'étape (i), comme structurant organique. L'anion associé aux cations ammoniums quaternaires présents dans l'espèce organique structurante pour la synthèse d'une zéolithe de type structural AFX selon l'invention est l'anion hydroxyde.

Conformément à l'invention, au moins une source d'au moins un métal alcalin est mise en oeuvre dans le mélange réactionnel de l'étape i), M étant de préférence choisi parmi le lithium, le potassium, le sodium et le mélange d'au moins deux de ces métaux. De manière très préférée, M est le sodium.

De préférence, la source d'au moins un métal alcalin et/ou alcalino-terreux M est l'hydroxyde de sodium.

Il peut être avantageux d'additionner des germes d'une zéolithe de type structural AFX au mélange réactionnel au cours de ladite étape i) du procédé de l'invention afin de réduire le temps nécessaire à la formation des cristaux d'une zéolithe de type structural AFX et/ou la durée totale de cristallisation. Lesdits germes cristallins favorisent également la formation de ladite zéolithe de type structural AFX au détriment d'impuretés. De tels germes comprennent des solides cristallisés, notamment des cristaux d'une zéolithe de type structural AFX. Les germes cristallins sont généralement ajoutés dans une proportion comprise entre 0,05 et 10% de la masse totale des sources desdits élément(s) Si et Al sous forme anhydre utilisées dans le mélange réactionnel, lesdits germes cristallins n'étant pas pris en compte dans la masse totale des sources des éléments Si et Al. Lesdits germes ne sont pas non plus pris en compte pour déterminer la composition du mélange réactionnel et/ou du gel, définie plus avant, c'est-à-dire dans la détermination des différents rapports molaires de la composition du mélange réactionnel.

L'étape i) de mélange est mise en oeuvre jusqu'à obtention d'un mélange homogène, de préférence pendant une durée supérieure ou égale à 10 minutes, de préférence sous agitation par tout système connu de l'homme du métier à faible ou fort taux de cisaillement.

A l'issue de l'étape i) on obtient un gel précurseur homogène.

Il peut être avantageux de mettre en oeuvre un mûrissement du mélange réactionnel avant la cristallisation hydrothermale au cours de ladite étape i) du procédé de l'invention afin de contrôler la taille des cristaux d'une zéolithe de type structural AFX. Ledit mûrissement favorise également la formation de ladite zéolithe de type structural AFX au détriment d'impuretés. Le mûrissement du mélange réactionnel au cours de ladite étape i) du procédé de l'invention peut être réalisé à température ambiante ou à une température comprise entre 20 et 60°C avec ou sans agitation, pendant une durée avantageusement comprise entre 30 min et 48 heures.

Conformément à l'étape ii) du procédé selon l'invention, le gel précurseur obtenu à l'issue de l'étape i) est soumis à un traitement hydrothermal sous pression atmosphérique, réalisé à une température comprise entre 75 et 95°C, préférentiellement réalisé à une température comprise entre 85 et 95°C, bornes incluses pendant une durée comprise entre 40 et 100 heures, jusqu'à ce que ladite zéolithe de type structural AFX se forme.

La durée nécessaire pour obtenir la cristallisation varie entre 40 et 100 heures, de préférence entre 48 et 80 heures.

La mise en réaction s'effectue généralement sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

A la fin de la réaction, après mise en oeuvre de ladite étape ii) du procédé de préparation selon l'invention, la phase solide formée d'une zéolithe de type structural AFX est de préférence filtrée, lavée puis séchée. Le séchage est généralement réalisé à une température comprise entre 20 et 150°C, de préférence entre 60 et 100°C, pendant une durée comprise entre 5 et 24 heures.

Il est également avantageux d'obtenir la forme protonée de la zéolithe de type structural AFX obtenue par le procédé selon l'invention. Ladite forme protonée peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe de type structural AFX en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

A l'issue de ladite étape de préparation ii) de la zéolithe AFX, la diffraction des rayons X permet de vérifier que le solide obtenu par le procédé selon l'invention est bien une zéolithe de type structural AFX. La pureté obtenue est supérieure à 90%, de préférence supérieure à 95%, de manière très préférée supérieure à 99,8% en poids.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖ,) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé de type structural AFX selon l'invention comporte au moins les raies aux valeurs de dₕₖₗ données dans le Tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,6Å et ± 0,01Å.

Tableau 1 : Valeurs moyennes des dhkl et intensités relatives mesurées sur un diagramme de diffraction de rayons X du solide cristallisé de type structural AFX.

**Tableau 1**

| 2 thêta (°) | dhkl (Å) | Irel | 2 thêta (°) | dhkl (Å) | Irel |
|---|---|---|---|---|---|
| 7,47 | 11,83 | mf | 22,52 | 3,95 | f |
| 8,56 | 10,32 | f | 26,06 | 3,42 | m |
| 8,67 | 10,19 | mf | 27,69 | 3,22 | mf |
| 11,59 | 7,63 | f | 27,76 | 3,21 | f |
| 12,96 | 6,82 | mf | 27,86 | 3,20 | mf |
| 14,99 | 5,91 | ff | 29,74 | 3,00 | ff |
| 15,60 | 5,67 | f | 30,22 | 2,95 | mf |
| 17,42 | 5,09 | mf | 30,49 | 2,93 | mf |
| 17,77 | 4,99 | mf | 31,48 | 2,84 | mf |
| 19,86 | 4,47 | f | 33,57 | 2,67 | f |
| 20,32 | 4,37 | m | 34,68 | 2,58 | f |
| 21,74 | 4,08 | FF | | | |

La spectrométrie de fluorescence des rayons X (FX) est une technique d'analyse chimique utilisant une propriété physique de la matière, la fluorescence de rayons X. Elle permet l'analyse de la majorité des éléments chimiques à partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

### AVANTAGES DE L'INVENTION

La zéolithe de type structural AFX obtenue présente une pureté et une facilité de préparation améliorées par rapport aux catalyseurs de l'art antérieur.

Un avantage de la présente invention est donc de fournir un nouveau procédé de préparation permettant la formation à basse température d'une zéolithe de type structural AFX exempte d'autres phases cristallines.

Un autre avantage de la présente invention est de permettre la préparation d'un gel précurseur d'une zéolithe de type structural AFX grâce à la combinaison d'une espèce organique ou structurant spécifique comportant deux fonctions ammonium quaternaire, le dihydroxyde de 1,6-bis(méthylpiperidinium)hexane et de conditions opératoires bien spécifiques, notamment une température de cristallisation comprise entre 75°C et 95°C, bornes incluses.

La zéolithe de type structural AFX de haute pureté obtenue par le procédé de synthèse selon l'invention peut être utilisée après échange ionique comme solide acide pour la catalyse dans les domaines du raffinage et de la pétrochimie. Elle peut également être utilisée comme adsorbant ou comme tamis moléculaire.

### EXEMPLES

L'invention est illustrée par les exemples suivants qui ne présentent, en aucun cas, un caractère limitatif.

### Exemple 1: préparation du dihydroxyde de 1,6-bis(méthylpiperidinium)hexane (structurant R).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN ¹H attendu. RMN ¹H (D₂O, ppm/TMS) : 1,27 (4H,m) ; 1,48 (4H,m) ; 1,61 (4H,m) ; 1,70 (8H,m) ; 2,85 (6H,s) ; 3,16 (12H,m).

18,9 g d'Ag₂O (0,08 mole, 99%, Aldrich) sont ajoutés dans un bécher en téflon de 250 ml contenant 30 g du structurant dibromure de 1,6-bis(méthylpiperidinium)hexane (0,07 mol) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

### Exemple 2: préparation d'un catalyseur contenant une zéolithe de type structural AFX selon l'invention.

### Préparation de la zéolithe AFX

49,83 g d'une solution aqueuse de dihydroxyde de 1,6-bis(méthylpiperidinium)hexane (18,36% en poids) préparé selon l'exemple 1 ont été mélangés avec 0,466 g d'eau déionisée. 2,1 g d'hydroxyde de sodium (solide, pureté 98% en poids, Aldrich) sont ajoutés au mélange précédent, la préparation obtenue est maintenue sous agitation pendant 10 minutes. Par la suite, 1,66 g d'aluminate de sodium (53,17% Al₂O₃ en poids, Strem Chemicals) sont incorporés et le gel de synthèse est maintenu sous agitation pendant 15 minutes. Au final, 25,96 g de silice colloïdale (Ludox HS40, 40% SiO₂ en poids, Aldrich) et 1,038 g de germes d'une zéolithe de type structural AFX obtenue par n'importe quelle méthode connue par l'homme du métier ont été incorporés dans le mélange de synthèse. La composition molaire du mélange sans prendre en compte les germes est la suivante: 100 SiO₂: 5 Al₂O₃: 16,7 R: 22,36 Na₂O: 1836 H₂O, soit un ratio SiO₂/Al₂O₃ de 10. Le gel précurseur est ensuite transféré, après homogénéisation, dans un réacteur équipé d'un réflux. Le réacteur est ensuite chauffé avec une montée de 5°C/min en température jusqu'à 95°C pendant 40 heures sous agitation à 200 tr/min avec un système à 4 pales inclinées. Le produit cristallisé obtenu est filtré, lavé à l'eau déionisée puis séché une nuit à 100°C. La perte au feu du produit obtenu après séchage est de 15%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe de type structural AFX de pureté supérieure à 99,8%. Le diagramme de diffraction effectué sur le solide de type structural AFX calciné est donné sur la **Figure 2****.** Le produit présente un rapport molaire SiO₂/Al₂O₃ de 12 tel que déterminé par fluorescence X.

## Revendications

1. Procédé de synthèse d'une zéolithe AFX de pureté supérieure à 90% comprenant au moins les étapes suivantes :
i) le mélange en milieu aqueux, d'au moins une source de silicium (Si) sous forme oxyde SiO₂, d'au moins une source d'aluminium (AI) sous forme oxyde Al₂O₃, d'un composé organique azoté R, R étant le dihydroxyde de 1,6-bis(méthylpiperidinium)hexane, d'au moins une source d'au moins un métal alcalin M choisi parmi le lithium, le potassium, ou le sodium, et le mélange d'au moins deux de ces métaux, le mélange réactionnel présentant la composition molaire suivante :
SiO₂/Al₂O₃ compris entre 4 et 60, de préférence entre 8 et 40
H₂O/SiO₂ compris entre 5 et 60, de préférence entre 10 et 40
R/SiO₂ compris entre 0,05 à 0,50, de préférence entre 0,10 et 0,30
M₂O/SiO₂ compris entre 0,10 à 0,30, de préférence entre 0,15 et 0,25,
jusqu'à l'obtention d'un gel précurseur homogène;
ii) le traitement hydrothermal sous pression atmosphérique dudit gel précurseur obtenu à l'issue de l'étape i) à une température comprise entre 75°C et 95°C, bornes incluses, pendant une durée comprise entre 40 et 100 heures, bornes incluses, pour obtenir une phase solide cristallisée de type structural AFX, dite zéolithe AFX.

2. Procédé selon la revendication 1 dans lequel M est le sodium.

3. Procédé selon la revendication 2 dans lequel la source d'au moins un métal alcalin M est l'hydroxyde de sodium.

4. Procédé selon l'une des revendications précédentes dans lequel on ajoute des germes cristallins d'une zéolithe de type structural AFX au mélange réactionnel de l'étape i), de préférence en quantité comprise entre 0,05 et 10% de la masse totale des sources desdits élément(s) Si et Al sous forme anhydre utilisées dans le mélange réactionnel, lesdits germes cristallins n'étant pas pris en compte dans la masse totale des sources des éléments Si et Al.

5. Procédé selon l'une des revendications précédentes dans lequel l'étape i) comprend une étape de mûrissement du mélange réactionnel à une température comprise entre 20 et 60°C, avec ou sans agitation, pendant une durée comprise entre 30 minutes et 48 heures.

6. Procédé selon l'une des revendications 1 à 5 dans lequel le traitement hydrothermal de l'étape ii) est réalisé à une température comprise entre 85°C et 95°C, bornes incluses, pendant une durée comprise entre 40 et 80 heures, de manière préférée entre 48 et 80 heures, bornes incluses.

7. Procédé selon l'une des revendications précédentes dans lequel, après mise en oeuvre de ladite étape ii), la phase solide formée d'une zéolithe de type structural AFX obtenue à l'issue de l'étape ii) est filtrée, lavée, et séchée à une température comprise entre 20 et 150°C, de préférence entre 60 et 100°C, pendant une durée comprise entre 5 et 24 heures pour obtenir une zéolithe séchée.

8. Procédé selon la revendication 7 dans lequel la zéolithe séchée est ensuite calcinée à une température comprise entre 450 et 700°C pendant une durée comprise entre 2 et 20 heures, la calcination pouvant être précédée d'une montée en température progressive.

## Patentansprüche

1. Verfahren zur Synthese eines AFX-Zeoliths mit einer Reinheit von mehr als 90 %, das mindestens die folgenden Schritte umfasst:
i) Mischen von mindestens einer Quelle von Silicium (Si) in SiO₂-Oxidform, mindestens einer Quelle von Aluminium (Al) in Al₂O₃-Oxidform, einer stickstoffhaltigen organischen Verbindung R, wobei es sich bei R um 1,6-Bis (methylpiperidinium)hexan handelt, mindestens einer Quelle von mindestens einem Alkalimetall M, das aus Lithium, Kalium oder Natrium und der Mischung von mindestens zwei dieser Metalle ausgewählt ist, in wässrigem Medium, wobei die Reaktionsmischung die folgende molare Zusammensetzung aufweist:
SiO₂/Al₂O₃ zwischen 4 und 60, vorzugsweise zwischen 8 und 40,
H₂O/SiO₂ zwischen 5 und 60, vorzugsweise zwischen 10 und 40,
R/SiO₂ zwischen 0,05 und 0,50, vorzugsweise zwischen 0,10 und 0,30,
M₂O/SiO₂ zwischen 0,10 und 0,30, vorzugsweise zwischen 0,15 und 0,25,
bis zum Erhalt eines homogenen Vorläufergels;
ii) hydrothermale Behandlung des am Ende von Schritt i) erhaltenen Vorläufergels unter Normaldruck bei einer Temperatur zwischen 75 °C und 95 °C, Grenzen eingeschlossen, über einen Zeitraum zwischen 40 und 100 Stunden, Grenzen eingeschlossen, was eine kristallisierte feste Phase vom AFX-Strukturtyp ergibt, die als AFX-Zeolith bezeichnet wird.

2. Verfahren nach Anspruch 1, wobei es sich bei M um Natrium handelt.

3. Verfahren nach Anspruch 2, wobei es sich bei der Quelle von mindestens einem Alkalimetall M um Natriumhydroxid handelt.

4. Verfahren nach einem der vorhergehenden Ansprüche, wobei man Kristallkeime eines Zeoliths vom AFX-Strukturtyp zu der Reaktionsmischung von Schritt i) gibt, vorzugsweise in einer Menge zwischen 0,05 und 10 % der Gesamtmasse der in der Reaktionsmischung verwendeten Quellen der Elemente Si und AI in wasserfreier Form, wobei die Kristallkeime in der Gesamtmasse der Quellen der Elemente Si und AI nicht berücksichtigt werden.

5. Verfahren nach einem der vorhergehenden Ansprüche, wobei der Schritt i) einen Schritt der Reifung der Reaktionsmischung bei einer Temperatur zwischen 20 und 60 °C, mit oder ohne Rühren, über einen Zeitraum zwischen 30 Minuten und 48 Stunden umfasst.

6. Verfahren nach einem der Ansprüche 1 bis 5, wobei die hydrothermale Behandlung von Schritt ii) bei einer Temperatur zwischen 85 °C und 90 °C, Grenzen eingeschlossen, über einen Zeitraum zwischen 40 und 80 Stunden, vorzugsweise zwischen 48 und 80 Stunden, Grenzen eingeschlossen, durchgeführt wird.

7. Verfahren nach einem der vorhergehenden Ansprüche, wobei nach der Durchführung von Schritt ii) die am Ende von Schritt ii) erhaltene gebildete feste Phase aus einem Zeolith vom AFX-Strukturtyp filtriert, gewaschen und bei einer Temperatur zwischen 20 und 150 °C, vorzugsweise zwischen 60 und 100 °C, über einen Zeitraum zwischen 5 und 24 Stunden getrocknet wird, was einen getrockneten Zeolith ergibt.

8. Verfahren nach Anspruch 7, wobei der getrocknete Zeolith dann bei einer Temperatur zwischen 450 und 700 °C über einen Zeitraum zwischen 2 und 20 Stunden getrocknet wird, wobei der Calcinierung eine allmähliche Temperatursteigerung vorgeschaltet sein kann.

## Claims

1. Process for synthesizing an AFX zeolite having a purity of greater than 90%, comprising at least the following steps:
i) mixing, in an aqueous medium, of at least one source of silicon (Si) in SiO₂ oxide form, at least one source of aluminium (Al) in Al₂O₃ oxide form, a nitrogenous organic compound R, R being 1,6-bis(methylpiperidinium)hexane dihydroxide, of at least one source of at least one alkali metal M chosen from lithium, potassium or sodium, and the mixture of at least two of these metals, the reaction mixture having the following molar composition:
SiO₂/Al₂O₃ between 4 and 60, preferably between 8 and 40,
H₂O/SiO₂ between 5 and 60, preferably between 10 and 40,
R/SiO₂ between 0.05 and 0.50, preferably between 0.10 and 0.30,
M₂O/SiO₂ between 0.10 and 0.30, preferably between 0.15 and 0.25,
until a homogeneous precursor gel is obtained;
ii) hydrothermal treatment under atmospheric pressure of said precursor gel obtained at the end of step i) at a temperature of between 75°C and 95°C, limits included, for a period of between 40 and 100 hours, limits included, to obtain a solid AFX-structure crystalline phase, termed "AFX zeolite".

2. Process according to Claim 1, in which M is sodium.

3. Process according to Claim 2, in which the source of at least one alkali metal M is sodium hydroxide.

4. Process according to one of the preceding claims, in which seed crystals of an AFX-structure zeolite are added to the reaction mixture of step i), preferably in an amount of between 0.05% and 10% of the total mass of the sources of said Si and Al element(s) in anhydrous form used in the reaction mixture, said seed crystals not being taken into account in the total mass of the sources of the Si and Al elements.

5. Process according to one of the preceding claims, in which step i) comprises a step of maturing the reaction mixture at a temperature of between 20 and 60°C, with or without stirring, for a period of between 30 minutes and 48 hours.

6. Process according to one of Claims 1 to 5, in which the hydrothermal treatment of step ii) is carried out at a temperature between 85°C and 95°C, limits included, for a period of between 40 and 80 hours, preferably between 48 and 80 hours, limits included.

7. Process according to one of the preceding claims, in which, after said step ii) has been carried out, the solid phase formed of an AFX-structure zeolite obtained at the end of step ii) is filtered, washed, and dried at a temperature of between 20 and 150°C, preferably between 60 and 100°C, for a period of between 5 and 24 hours to obtain a dried zeolite.

8. Process according to Claim 7, in which the dried zeolite is then calcined at a temperature of between 450 and 700°C for a period of between 2 and 20 hours, the calcination possibly being preceded by a gradual temperature increase.
